# EUROPÄISCHE PATENTANMELDUNG

(11) **EP 1 045 166 A1**
(43) Veröffentlichungstag der Anmeldung: **18.10.2000**
(21) Anmeldenummer: 99810316.2
(22) Anmeldetag: 16.04.1999
(51) Int. Cl.: F16F 9/02

(54) **Längenverstellbare Fluidfeder**

(71) Anmelder: Cabex AG, 9490 Vaduz (LI)
(72) Erfinder: Kulhavy, Sava V., 9000 St.Gallen (CH)
(74) Vertreter: Kulhavy, Sava, Dipl.-Ing.

(57) **Zusammenfassung**

Die Fluidfeder hat einen Zylinder (10), in welchem ein Kolben angeordnet ist. Sie hat ferner zumindest ein Endstück (12), welches einer der Endpartien des Zylinders (10) zugeordnet ist. In diesem Endstück ist eine Ventilvorrichtung (30) ausgeführt, wobei diese Ventilvorrichtung eine Betätigungsstange (3) sowie zumindest ein Dichtelement (50) umfasst. Dieses Dichtelement (50) ist auf der Betätigungsstange (3) befestigt.

## Beschreibung

Die vorliegende Erfindung betrifft eine längenverstellbare Fluidfeder, mit einem Zylinder, in welchem ein Kolben angeordnet ist, mit Endstücken, welchen den Endpartien des Zylinders zugeordnet sind, und mit einer Ventilvorrichtung, welche in einem der Endstücke ausgeführt ist, wobei diese Ventilvorrichtung eine Betätigungsstange sowie zumindest ein Dichtungselement aufweist.

Solche Fluidfeder sind bereits bekannt. Das Dichtungselement der Dichtungsvorrichtung ist an der Betätigungsstange unter Verwendung von weiteren Mitteln wie von Muttern und ähnlichem befestigt. Bei der Montage der Fluidfeder muss man zunächst eines oder mehrere Dichtungselemente an der Betätigungsstange möglichst genau anbringen. Dies ist nicht nur zeitraubend und umständlich, sondern dies erfordert auch, dass die diese Montage durchführende Person höchst präzise arbeitet.

Die Aufgabe der vorliegenden Erfindung ist, die genannten sowie noch weitere Nachteile der bekannten Fluidfeder zu beseitigen.

Diese Aufgabe wird bei der Fluidfeder der eingangs genannten Gattung erfindungsgemäss so gelöst, wie dies im kennzeichnenden Teil des Patentanspruchs 1 definiert ist.

Nachstehend werden Ausführungsformen der vorliegenden Erfindung anhand der beiliegenden Zeichnungen näher erläutert. Es zeigt:
Fig. 1 in einem vertikalen Längsschnitt die vorliegende Fluidfeder, welche eine erste Ausführungsform einer Ventilvorrichtung aufweist,
Fig. 2 einen Ausschnitt aus Fig. 1, welcher die Ventilvorrichtung vergrössert darstellt,
Fig. 3 vergrössert einen Dichtungskörper der Ventilvorrichtung aus Fig. 2,
Fig. 4 in einem vertikalen Längsschnitt eine zweite Ausführung der Ventilvorrichtung,
Fig. 5 vergrössert den Dichtungskörper der Ventilvorrichtung aus Fig. 4,
Fig. 6 in einem vertikalen Längsschnitt eine dritte Ausführung der Ventilvorrichtung,
Fig. 7 vergrössert den Dichtungskörper der Ventilvorrichtung aus Fig. 6,
Fig. 8 in einem vertikalen Längsschnitt eine vierte Ausführung der Ventilvorrichtung,
Fig. 9 vergrössert den Dichtungskörper der Ventilvorrichtung aus Fig. 8,
Fig. 10 in einem vertikalen Längsschnitt eine fünfte Ausführung der Ventilvorrichtung,
Fig. 11 vergrössert den Dichtungskörper der Ventilvorrichtung aus Fig. 10,
Fig. 12 in einem vertikalen Längsschnitt eine sechste Ausführung der Ventilvorrichtung,
Fig. 13 vergrössert den Dichtungskörper der Ventilvorrichtung aus Fig. 10,
Fig. 14 in einem vertikalen Längsschnitt eine siebte Ausführung der Ventilvorrichtung und
Fig. 15 vergrössert den Dichtungskörper der Ventilvorrichtung aus Fig. 14.

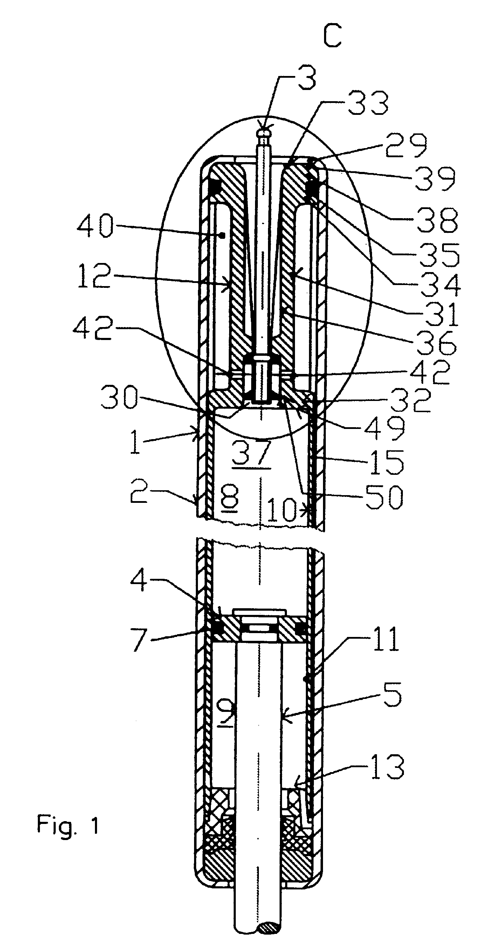

Fig. 1 zeigt in einem vertikalen Längsschnitt die vorliegende Fluidfeder. Diese weist ein Gehäuse 1 auf, welches nachstehend auch als Aussenteil dieser Einrichtung bezeichnet wird. Der Grundkörper 2 dieses Aussenteiles 1 ist im wesentlichen zylinderförmig bzw. rohrförmig. Auf dem oberen Abschnitt des Gehäuses 1 kann die Sitzfläche eines Stuhls, die Platte eines Tisches oder dgl. aufgesetzt sein. Zur Betätigung der Verstelleinrichtung ragt ein an sich bekannter Stössel 3 axial aus der oberen Stirnfläche des Grundkörpers 2 dieser Verstelleinrichtung heraus. Die vorliegende Einrichtung umfasst ferner einen Innenteil 10, welcher einen im wesentlichen zylinder- bzw. rohrförmigen Grundkörper 11 aufweist und welcher im Aussenteil 1 angeordnet bzw. eingesetzt ist. Im Hohlraum 37 des Innenteiles 10 befindet sich ein Kolben 4, welcher an einem Ende einer Stange 5 angebracht ist. Dieser Kolben 4 teilt den Hohlraum 37 im Innenteil 10 in zwei Teilräume 8 und 9, wobei zu je einer Seite des Kolbens 4 sich einer dieser Teilräume 8 bzw. 9 befindet. Der Kolben 4 ist im Innenteil 10 fluiddicht verschiebbar gelagert.

Den Endpartien des Innenteiles 10 ist je ein im wesentlichen zylinderförmiges Endstück 12 bzw. 13 zugeordnet. Die Längsachse der Endstücke 12 und 13 liegt gleich wie die Längsachse des Innenteils 10 auf der Haupt- bzw. Längsachse C der Fluidfeder.

Die erwähnte Zuordnung ist so durchgeführt, dass nur die dem Innenteil 10 zugewandte Endpartie des jeweiligen Endstückes 12 bzw. 13 mit der betreffenden Endpartie des Innenteiles 10 fest verbunden ist. Der Innenteil 10 reicht somit nur vom zugewandten Ende eines der Endstücke 12 bis zum zugewandten Ende des anderen Endstücks 13. Die Aussenseite der Endstücke 12 und 13 ist somit vom Innenteil 10 nicht umgeben. Die Länge des Innenteiles 10 zusammen mit der Länge der Endstücke 12 und 13 entspricht im Wesentlichen der Länge des Aussenteiles 1 dieser Fluidfeder. Die Endstücke 12 und 13 sind nur vom Aussenteil 1 umgeben.

Eines der Endstücke 12 ist mit einer Ventilvorrichtung 30 versehen, die das Ueberströmen eines Fluids zwischen den Teilräumen 8 und 9 im Innenteil 10 ermöglicht und steuert. Durch das zweite bzw. andere Endstück 13 geht die Kolbenstange 5 hindurch und diese ragt aus der unteren bzw. gegenüberliegenden Endpartie des Federgehäuses bzw. Aussenteiles 1 heraus. Die aus dem Gehäuse 1 ragende Endpartie der Kolbenstange 5 ist der Bodenplatte eines Führungsrohres (nicht dargestellt) zugeordnet, welches mit dem Fuss eines Stuhles, eines Tisches oder dgl. verbunden ist.

Die Aussenseite des Innenteiles 10 liegt, unter Umständen mit Spiel, an der Innenseite des Aussenteiles 1 an und ein Ueberströmkanal 15 ist zwischen dem Aussenteil 1 und dem Innenteil 10 ausgeführt. Je eine der Mündungen dieses Kanals 15 liegt im Bereich eines der bereits erwähnten Endstücke 12 bzw. 13. Im dargestellten Fall ist der Ueberströmkanal 15 in der Aussenseite des Grundkörpers 11 des Innenteiles 10 ausgeführt und er hat die Form einer Rinne bzw. Nut. Die vierte Wand dieses Kanals 15 ist durch den über dem Kanal 15 liegenden Abschnitt der Innenseite des Aussenteiles 1 gebildet.

Das erste Endstück 12 weist einen im wesentlichen rohrförmigen Grundkörper 31 auf, dessen Längsachse auf der Längsachse C der Fluidfeder liegt und dessen Aussendurchmesser kleiner ist als der Innendurchmesser des Aussenteiles 1. Folglich ist ein Frei-bzw. Aussenraum 40 zwischen dem Grundkörper 31 des Endstückes 12 und dem Aussenteil 1 vorhanden. Die dem Innenteil 10 zugewandte Endpartien des Endstück-Grundkörpers 31 ist mit dem rohrförmigen Grundkörper 11 des Innenteiles 10 einstückig. Der ringförmige Raum zwischen dem Endstück-Grundkörper 31 und dem Innenteil-Grundkörper 11 ist mit Hilfe einer ringförmigen Scheibe 32 überbrückt, welche vom Grundkörper 31 des Endstückes 12 absteht. Die innere Kante der Ringscheibe 32 ist mit dem Grundkörper 31 des Endstückes 10 somit einstückig. Im dargestellten Fall ist die äussere Kante der Ringscheibe 32 mit dem Grundkörper 11 des Innenteiles 10 ebenfalls einstückig. In der dem Innenteil 10 zugewandten Grossfläche 49 der Ringscheibe 32 ist die Mündung 16 ausgeführt. Es ist jedoch auch möglich, die Ringscheibe 45 nur mit dem Grundkörper 31 des Endstückes 12 einstückig zu machen. Die äussere Randpartie dieser Scheibe 45 ist dann so ausgebildet, dass sie in eine Mündung (nicht dargestellt) des Grundkörpers 11 des Innenrohres 10 fluiddicht einsetzen lässt.

Das gegenüber liegende Ende des rohrförmigen Endstück-Grundkörpers 31 ist mit einem radial abstehenden Kragen 33 versehen. Der Durchmesser dieses Kragens 33 ist derart, dass seine Umfangsfläche bis zur Innenseite des Aussenteiles 1 reicht. In dieser Umfangsfläche ist eine umlaufende Rille 34 ausgeführt, in welcher ein Dichtring 35 liegt. Die Umfangsfläche dieses Dichtringes 35 liegt an der Innenfläche des Aussenteiles 1 dichtend auf. Auf der Stirnfläche 39 des Kragens 33 liegt ein eingebördelter Rand 29 des Aussenteiles 1 auf.

Die im wesentlichen zylinderförmige Innenfläche des rohrförmigen Grundkörpers 31 des Endstückes 12 begrenzt einen Innenraum 36 in diesem Grundkörper 31. Die innere Kante der Ringscheibe 32, welche sich am innenliegenden Ende des Grundkörpers 31 befindet, umgibt bzw. begrenzt eine innenliegende Mündung 16 des Innenraumes 36 im Grundkörper 31. Diese Mündung 16 öffnet sich in den Hohlraum 37 im Innenteil 10. Die andere bzw. aussenliegende Mündung 17 des Innenraumes 36 liegt im Bereich des Kragens 33 am Grundkörper 31 dieses Endstückes 12 und sie ist durch die innere Kante dieses Kragens 33 begrenzt.

Zwischen dem Grundkörper 31 des Endstückes 12 und dem Aussenteil 1 der Fluidfeder ist der bereits erwähnte Aussenraum 40 des Endstückes 12 vorhanden. Dieser Aussenraum 40 ist in Achsialrichtung durch die Innenflächen der Ringscheibe 32 und des Kragens 33 begrenzt. In diesen Aussenraum 40 mündet einerends der Ueberströmkanal 15. Quer durch die Wand des rohrförmigen Grundkörpers 31 des Endstückes 12 verlaufen Kanäle 42, welche den Endstückaussenraum 40 mit dem Endstückinnenraum 36 fluidmässig verbinden. Der Durchmesser dieser Verbindungskanäle 42 kann so bemessen sein, dass diese Kanäle 42 den Durchfluss des Fluids zwischen den Teilräumen 8 und 9 des Innenteiles 10 drosseln können.

Von der Innenwand des Grundkörpers 31 steht eine ringförmige Schulter 20 ab, welche sich somit im Innenraum 36 des Grundkörpers 31 befindet und welche praktisch senkrecht zur Längsachse C steht. Diese Schulter 20 unterteilt den Grundkörperinnenraum 36 in zwei Teilräume 21 und 22. Der aussenliegende Teilraum 21 erstreckt sich von der Schulter 20 bis zur aussenliegenden Mündung 17 dieses Innenraumes 36. Der innenliegende Teilraum 22 erstreckt sich von der Schulter 20 bis zur innenliegenden Mündung 16 dieses Innenraumes 36. Die Teilräume 21 und 22 sind im wesentlichen zylinderförmig und die Hauptachse C geht durch die Mitte dieser Teilräume 21 und 22 hindurch.

Die Schulter 20 kann an der innenliegenden Mündung 16 näher liegen als an der aussenliegenden Mündung 17, sodass der aussenliegende Teilraum 21 in axialer Richtung länger ist als der innenliegende Teilraum 22. Der aussenliegende Teilraum 21 kann beispielsweise dreimal länger sein als der innenliegende Teilraum 22. Die bereits erwähnten Verbindungskanäle 42 liegen unterhalb der Schulter 20, sodass sie sich im Bereich des innenliegenden Teilraumes 22 befinden. Diese Kanäle 42 verbinden diesen innenliegenden Teilraum 22 fluidmässig mit dem Aussenraum 40 am Endstück 12, in welchen der Ueberströmkanal 15 mündet.

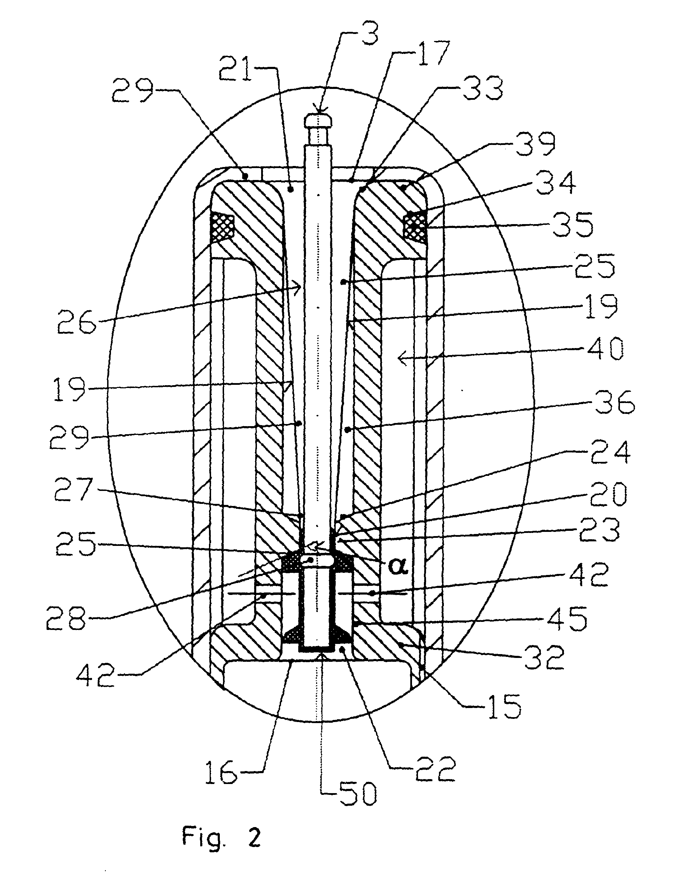

Im in Fig. 1 und 2 dargestellten Fall weist die Schulter 20 einen trapezförmigen Querschnitt auf, wobei dieses Trapez ein gleichschenkliges Trapez sein kann. Das Trapez schliesst sich mit seiner längeren bzw. breiteren Grundfläche an den Grundkörper 31 dieses Endstückes 12 an, sodass es mit diesem Grundkörper 31 einstückig ist. Die kürzere Grundfläche 23 sowie die Seitenflächen 24 und 25 des Trapezes sind dagegen freistehend. Eine dieser Seitenflächen 24 ist der aussenliegenden Mündung 17 des Endstückgrundkörpers 31 zugewandt und sie bildet einen praktisch ringförmigen Boden des äusseren Teilraumes 21. Die andere Seitenfläche 25 des Trapezes ist der innenliegenden Mündung 16 des Innenraumes 36 im Endstückgrundkörper 31 zugewandt und sie bildet einen ebenfalls praktisch ringförmigen Boden des innenliegenden Teilraumes 22. Diese Trapezseite 25 schliesst mit der Längsachse C einen Winkel Alpha (Fig. 2), welcher zwischen 50 und 90 Grad liegen kann und welcher vorteilhaft 65 Grad beträgt.

Die kleinere Grundfläche 23 des Trapezes, die praktisch parallel zur Hauptachse C verläuft, bildet eine zylinderförmige Stirnfläche 23 der Schulter 20. Im Innenraum 36 des Endstückes 12 befinden sich Verstärkungsrippen 19, welche von der Innenwand des Grundkörpers 31 dieses Endstückes 12 abstehen und mit dem Grundkörper 31 einstückig sind. Die jeweilige Rippe 19 erstreckt sich von der aussenliegenden Mündung 17 bis zur umlaufenden Schulter 20. Die Stirnfläche 29 der jeweiligen Rippe 19 verläuft geradlinig, und zwar von der Mündung 17 bis zur Zylinderfläche 23 an der Schulter 20.

Die Betätigungsstange 3 weist einen stabförmigen Grundkörper 26 auf, dessen Längsachse in unbetätigter Stellung auf der Haupt- bzw. Längsachse C der Fluidfeder liegt. Der grösste Teil des Stangengrundkörpers 26 befindet sich im Innenraum 36 des Endstückes 12. Nur ein kurzer Abschnitt des Stössels 3 ragt oben aus der aussenliegenden Mündung 17. Dieser Stangenendabschnitt dient zur Betätigung der Ventilvorrichtung 30. Die Betätigungsstange 3 geht auch durch die umlaufende Schulter 20 hindurch, sodass die zylinderförmige Stirnfläche 23 der umlaufenden Schulter 20 den Grundkörper 26 des Stössels 3 mit Spiel umgibt. In unbetätigter Stellung verläuft die Oberfläche des Stössels 3 praktisch parallel zur Stirnfläche 23. Der Durchmesser des Stabgrundkörpers 26 ist kleiner als der Durchmesser der Zylinderfläche 23 der Schulter 20, damit ein Zwischenraum bzw. ein ringförmiger Spalt 27 zwischen der Schulterstirnfläche 23 und dem Stösselgrundkörper 26 vorhanden ist. Am Stösselgrundkörper 26 ist eine umlaufende Verdickung 28 ausgeführt, welche sich unterhalb der Schulter 20 befindet.

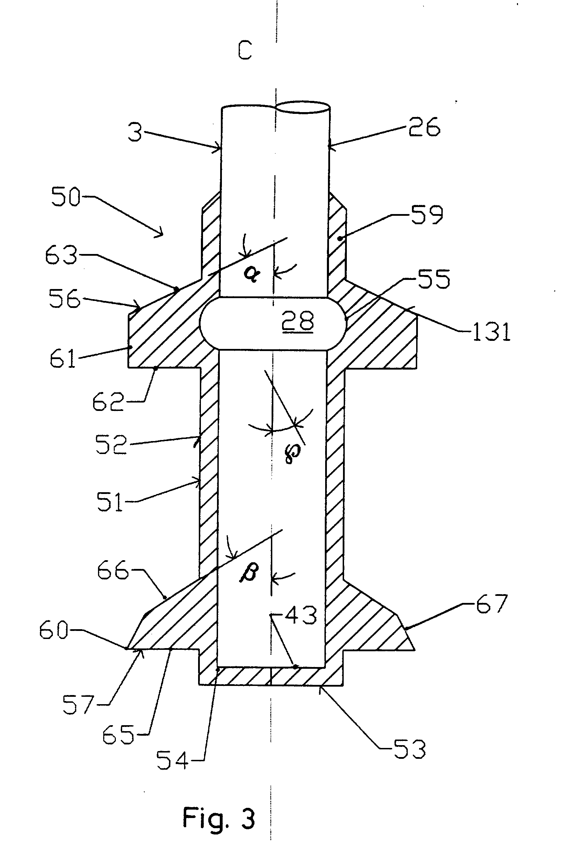

Die vorliegende Fluidfeder enthält auch ein Dichtungselement 50, welches aus einem nachgiebigen und dichtenden Material ist. Dieses Dichtungselement 50 (Fig. 3) it an der Betätigungsstange 3 angebracht bzw. befestigt. Das Dichtungselement 50 weist einen hülsenförmigen Grundkörper 51 auf, welcher eine praktisch zylinderförmige Seitenwand 52 sowie einen Boden 53 umfasst. Dieser Boden 53 ist im Bereich jener Mündung 54 der Hülse 51 angebracht, welche dem Inneren 37 des Innenteiles 10 dieser Fluidfeder zugewandt ist. Der Boden 53 ist mit der Hülsenseitenwand 52 einstückig. Der Innendurchmesser der Hülsenseitenwand 52 entspricht dem Aussendurchmesser des Grundkörpers 26 der Betätigungsstange 3, sodass die Hülse 51 auf der Stange 3 aufgesteckt sein kann. Dabei liegt die Endfläche 43 des Stangengrundkörpers 26 auf der Innenfläche des Hülsenbodens 53.

In der Innenfläche der Hülsenwand 52 ist eine Ausnehmung 55 ausgeführt, deren Form und deren Abmessungen der Form und den Abmessungen der Verdickung 28 am Grundkörper 26 der Betätigungsstange 3 entspricht. Der Abstand der Ausnehmung 55 vom Hülsenboden 53 gleicht dem Abstand der Verdickung 28 von der Stirnfläche 43 der Betätigungsstange 3. Folglich kann die Verdickung 28 in der Ausnehmung 55 Platz finden, wenn die Betätigunsstange 3 im Dichtungselement 50 eingesteckt ist. Unter anderem auch durch die Verdickung 28 und die Ausnehmung 55 ist das Dichtungselement 50 auf der Betätigungsstange 3 festgehalten.

Der äussere Durchmesser der Hülsenwand 52 entspricht dem inneren Durchmesser der zylindrischen Stirnfläche 23 an der umlaufenden Schulter 20 des Endstückes 12. Die Länge bzw. Höhe der Hülsenwand 52 ist so gewählt, dass die offene Endpartie 59 derselben zumindest teilweise im Spalt 27 zwischen der Betätigungsstange 3 und der Schulter 20 liegt. Die quer zur Längsachse C liegenden Abmessungen der Hülsenwand 52 sind so bemessen, dass die im Spalt 27 liegende Endpartie 59 der Hülse 51 diesen Spalt 27 fluidmässig abdichtet.

Von der Aussenfläche der Hülsenwand 52 stehen umlaufende Erhebungen bzw. Wülste 56 und 57 ab, welche zur Längsachse C praktisch rechtwinklig stehen und welche sich in einem Abstand voneinander befinden. Diese Wülste 56 und 57 befinden sich im innenliegenden Teilraum 22 des Endstückes 12. Die erste bzw. obere Erhebung 56 befindet sich nahe an der offenen Endpartie 59 der Hülse 51, während die zweite bzw. untere Erhebung 57 nahe am Hülsenboden 53 angeordnet ist.

Der erste Wulst 56 hat einen viereckigen Querschnitt, wobei eine erste Seite eines solchen Querschnittes mit der Aussenfläche der Hülsenwand 52 zusammenfällt, sodass dieser Wulst 56 mit der Hülse 52 einstückig ist. Diese erste Seite des Wulstes 56, die dieser gegenüberliegende zweite Seite 61 sowie die untere bzw. dritte Seite 62 des Wulstes 56 schliessen zwischen sich jeweils einen rechten Winkel. Die untere Seite 62 des Wulstes 56 steht ausserdem rechtwinklig zur Längsachse C.

Die vierte und der oben liegende bzw. der offenen Endpartie 59 der Hülse 51 näher liegende Seite 63 des Viereckes 56 steht zur Längsachse C unter einem Winkel Alpha, welcher kleiner ist als der rechte Winkel und dessen Grösse der Grösse jenes Winkels Alpha gleicht, welchen die untere Seitenfläche 25 der Schulter 20 am Endstückgrundkörper 31 mit der Längsachse C schliesst.

Folglich können die obere Seite 63 des Wulstes 56 und die untere Seite 25 der Schulter 20 grossflächig aufeinander aufliegen. Da der Wulst 56 aus einem dichtenden Material ist, dichten die aufeinander liegenden Flächen 25 und 63 den Spalt 27 zusätzlich ab. Die im Spalt 27 liegende Endpartie 59 der Hülsenwand 52 schliesst sich an die obere und schräg verlaufende Seitenfläche 63 dieses Wulstes 56 unmittelbar an.

Der Durchmesser der zweiten Wand bzw. der Aussewand 61 dieses Wulstes 56 ist praktisch gleich gross wie der Durchmesser der Wand des inneren Teilraumes 22 im Endstück 12. Folglich liegt die Aussenwand 61 des Wulstes 56 an der Innenwand des genannten Teilraumes 22 an, wodurch eine fluidmässige Abdichtung des Endstückes 12 gegen aussen auch hier erfolgt.

Die Verdickung 28 sowie die Ausnehmung 55 liegen innerhalb der Höhe des oberen Wulstes 56 am Dichtungselement 50. Da die Umfangsfläche 61 dieses Wulstes 56 an der Innenfläche des inneren Teilraumes 22 aufliegt, kann das Material des Wulstes 56 in Radialrichtung nicht ausweichen. Einerseits stellt diese Massnahme die Achsiallage der Betätigungsstange 3 im Endstück 12 sicher und andererseits erlaubt diese Massnahme, dass die im Endstück 12 gelagerte Betätigungsstange 3 Schwenkbewegungen ausführen kann, wobei die Schwenkachse in diesem Bereich der Betätigungsstange 3 liegt. Die Verdickung 28 kann einen grösseren Durchmesser haben als die Aussnehmung 55, damit die Stange 3 im Endstück 12 sicher sitzt.

Der Querschnitt der zweiten Erhebung bzw. des zweiten Wulstes 57 ist zwar ebenfalls viereckig, aber diese Viereckform ist so gewählt, dass die äussere Randpartie dieses Wulstes 57 eine lippenähnliche Kante 60 bildet. Die erste Seite des Wulstes 57, welche zur Längsachse C des Dichtungselementes 50 parallel verläuft, ist mit der Aussenseite der Hülsenwand 52 einstückig, sodass dieser Wulst 57 mit dem Hülsengrundkörper 51 ebenfalls einstückig ist. Eine weitere bzw. zweite Wulstwand 65 steht praktisch senkrecht zur Längsachse C und sie liegt im Bereich des Boden 53 der Hülse 51, d.h. dass sie sich in jenem Bereich des Wulstes 57 befindet, welcher dem Hülsenboden 53 zugewandt ist. Die dritte Wulstwand 66 und die vierte Wulstwand 67 sind hintereinander geschaltet und sie verlaufen schräg zur Längsachse C, jedoch unter unterschiedlichen Winkeln.

Die dritte Wulstwand 66 schliesst sich einerends an den Hülsengrundkörper 51 an. Ihre Oberfläche schliesst mit der Längsachse C einen Winkel Beta, welcher kleiner ist als 90 Grad. Die vierte Wulstwand 67 schliesst sich einerseits an diese dritte Wulstwand 66 und andererseits an die von der Hülse 51 entfernt liegende Kante der zweiten Wulstwand 65 an. Der Winkel Gamma, welchen diese vierte Wulstwand 67 mit der Längsachse C schliesst, ist kleiner als der Winkel Beta, welchen die dritte Wulstwand 66 mit der Längsachse C schliesst. Die Eckpartie 60, in der sich die zweite Wulstwand 65 mit der vierten Wulstwand 67 treffen, bildet die nachgiebige Kante des zweiten Wulstes 57.

Der Durchmesser dieser Kante 60 ist unter anderem so gewählt, dass sie in der Ruhelage der Betätigungsstange 3 über ihren gesamten Umfang an der Innenwand des inneren Teilraumes 22 im Endstück 12 fluiddicht aufliegt und dass sie dadurch den Fluss von Fluid zwischen den Teilräumen 8 und 9 des Innenteiles 10 verhindert. Die Grösse des Durchmessers der Kante 60 muss auch mit Rücksicht auf die folgende Arbeitsweise der Fluidfeder gewählt werden.

Wenn das aus dem Aussenteil 1 der Fluidfeder ragende Ende der Betätigungsstange 3 zu einer Seite ausgeschwenkt wird, dann bewegt sich das gegenüberliegende Ende der Betätigungsstange 3 im inneren Teilraum 22 des Endstückes 12 in der gegenüberliegenden Richtung. Da die Wulstkante 60 sich im Bereich der innenliegenden Endfläche 43 der Betätigungsstange 3 befindet, wird diese nachgiebige Kante 60 zusammen mit diesem Stangenende 43 gegen die Innenwand des Teilraumes 22 hin bewegt. Durch ein Andrücken gegen die Wand des Teilraumes 22 wird der angedrückte Abschnitt der Kante 60 zusammengedrückt. An der gegenüberliegenden Seite der Kante 60 entsteht dabei ein Spalt zwischen dem dort liegenden Abschnitt der Kante 60 und der Innenwand dieses Teilraumes 22. Durch diesen Spalt kann das Fluid strömen, beispielsweise aus dem Teilraum 8 des Innenteiles 10 in den Teilraum 22 im Endstück 12 und dann weiter durch die Kanäle 42 und durch den Ueberströmkanal 15 in den anderen Teilraum 9 im Innenteil 10, oder umgekehrt.

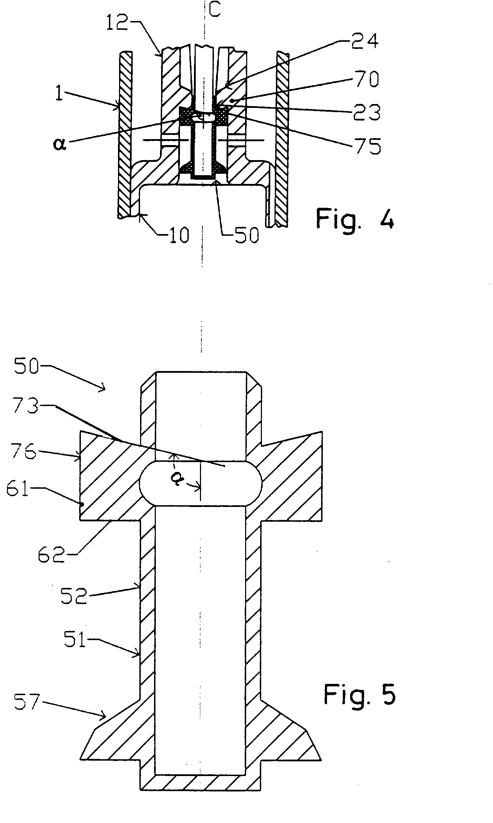

Das Fluid steht im innenliegenden Teilraum 22 des Endstückes 12 unter einem sehr hohen Druck. Um die Uebergangsstelle zwischen den zwei Teilräumen 21 und 22 des Endstückes 12, durch welche die schwenkbare Betätigungsstange 3 hindurchgeht, noch zuverlässiger abzudichten, ist eine weitere Ausführungsform dieser Fluidfeder vorgesehen. Diese ist in Fig. 4 und 5 dargestellt. Die umlaufende Schulter 70 am Grundkörper 31 des Endstückes 12 hat bei dieser Ausführungsform im Querschnitt die Form eines Parallelogramms oder eine Form, welche sich dem Parallelogramm nähert. Die dem Grundkörper 31 zugeordnete Grundfläche dieses Parallelogramms ist mit der Innenfläche dieses Grundkörpers 31 einstückig. Die gegenüberliegende Grund- bzw. Stirnfläche 23 sowie die aussenliegende Seitenfläche 24 entsprechen den vorstehend beschriebenen und gleich nummerierten Flächen.

Die unten liegende bzw. innenliegende Seitenfläche 75 der umlaufenden Schulter 70, welche den genannten Querschnitt aufweist, schliesst mit der Längsachse C einen Winkel Alpha, welcher grösser als 90 Grad und kleiner als 140 Grad ist, wobei dieser Winkel Alpha vorteilhaft 105 Grad beträgt. Damit die oben liegende Seitenfläche 73 dieses Wulstes 76 am Dichtelement 50 auf eine solche Seitenfläche 75 der Schulter 70 möglichst grossflächig und dichtend aufliegen kann, ist die oben liegende Seitenfläche 73 so ausgeführt, dass sie mit der Längsachse C ebenfalls einen Winkel Alpha schliesst, der so gross ist wie dies hier im Zusammenhang mit der innenliegenden Seitenfläche 75 der Schulter 70 angegeben ist. Im übrigen entspricht diese Ausführungsform der Fluidfeder der vorstehend beschriebenen Ausführungsform der Fluidfeder.

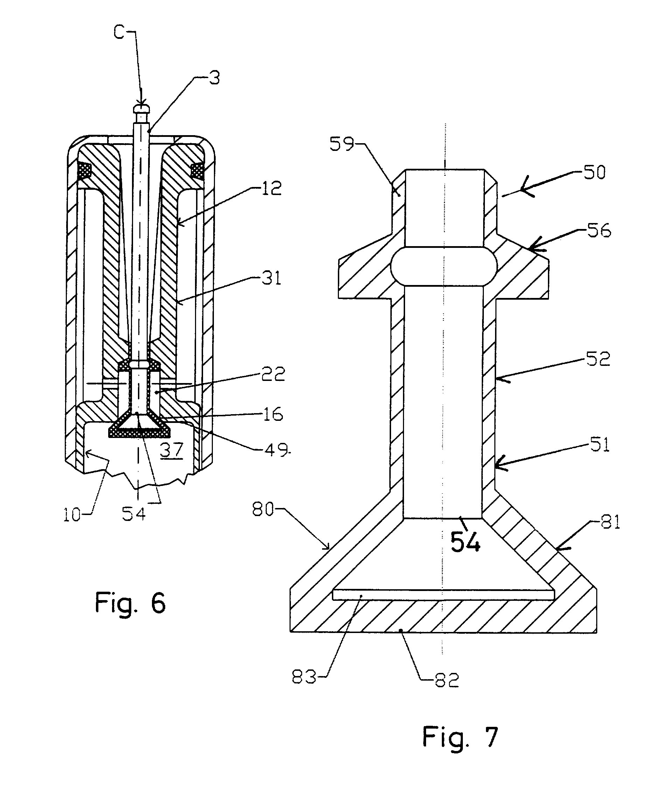

In Fig. 6 und 7 ist ein Ausschnitt aus einer weiteren Ausführungsform der vorliegenden Fluidfeder dargestellt. Diese Ausführungsform entspricht weitgehend jener Fluidfeder, welche im Zusammenhang mit Fig. 1 bis 3 vorstehend beschrieben ist. Von dieser unterscheidet sich die Ausführung gemäss Fig. 6 und 7 vor allem in der Ausbildung des zweiten Wulstes am Dichtelement 50. Bei diesem Dichtelement 50 fällt der vorstehend beschriebene Boden 53 weg.

An die untere bzw. innenliegende Mündung 54 der Hülsenwand 52 schliesst sich eine Erweiterung 80 der Hülse 51 an. Diese Erweiterung 80 umfasst unter anderem einen konusförmigen Mantel 81 sowie einen Boden 82. Die kleinere Grundfläche bzw. die kleinere Mündung des Konusses 81 schliesst sich an die innenliegende, d.h. dem Innenteil 10 zugewandte Mündung 54 der Hülsenwand 52 an und sie ist mit der Hülsenwand 52 einstückig. An die grössere Grundfläche bzw. an die den grösseren Durchmesser aufweisende Mündung des Konusses 81 schliesst sich der Boden 82 der Erweiterung 80 an und dieser ist mit der Konuswand 81 ebenfalls einstückig. Es versteht sich, dass die Erweiterung 80, gleich wie der übrige Teil des Dichtelementes 50 aus einem dichtenden Material ist.

Im Inneren der Erweiterung 80 ist ein den Boden 82 versteifendes Element 83 angeordnet, welches auf der Oberseite des Bodens 82 liegt und welches bis in jenen Bereich des Bodens 82 reicht, wo sich dieser an die Konuswand 81 anschliesst. Dieses Element 83 kann eine Scheibe oder eine parktisch kreisförmige Feder sein.

Der Durchmesser der grösseren Konusgrundfläche und somit auch des Konusbodens 82 ist grösser als der Durchmesser der innenliegenden Mündung 16 in der Stirnfläche 49 der Ringscheibe 32 im Endstück 12. Die Länge der Hülsenwand 52 ist so bemessen, dass die untere Mündung 54 der Hülsenwand 52 noch im Inneren des unteren Teilraumes 22 liegt. Die Folge davon ist, dass die Kante der unteren Mündung 16 des Teilraumes 22 auf der Aussenfläche der Konuswand 81 dieser Erweiterung bzw. dieses Wulstes 80 aufliegt. Diese Mündung 16 liegt auf der Aussenfläche der Konuswand 81 gleichmässig und entlang der ganzen Mündung 16, solange sich der Betätigungshebel 3 in seiner zentralen, d.h. unbetätigten Lage befindet.

Der hohe Druck des Fluids im Inneren 37 des Innenteiles 10 wirkt auf die vergrösserte Aussenfläche des Konusbodens 82 ein, wodurch dieser Wulst 80 bzw. die Konuswand 81 desselben um so mehr auf die Kante der unteren Mündung 16 des innenliegenden Teilraumes 22 im Endstück 12 angepresst wird. Dies verursacht eine zuverlässige Abdichtung des Innenraumes 37 des Innenteiles 10 gegenüber dem Teilraum 22 im Endstück 12, sodass Fluid weder aus dem Innenteil 10 wegfliessen noch in diesen hineinfliessen kann.

Wenn die Länge der Fluidfeder geändert werden soll, dann schwenkt man das aus dem Aussenteil 1 ragende Ende des Betätigungshebels 3 zu einer Seite. Das Dichtelement 50, welches am anderen Ende der Betätigungsstange 3 angebracht ist, wird gegen die Kante der Mündung 16 bewegt. Dabei wird die Konuswand 81 in jenem Bereich derselben deformiert bzw. eingedrückt, in welchem die Kante 16 in diese Wand 81 eindringt. An der gegenüberliegenden Seite der Konuswand 81 entsteht jedoch zugleich ein Spalt zwischen diesem Abschnitt der Konuswand 81 und der Kante der Mündung 16. Durch diesen Spalt kann das Fluid so lange strömen, bis man die Betätigungsstange 3 loslässt. Dann kehrt dieser Hebel 3 in seine zentrale Lage wieder zurück und die Kante der Münung 16 liegt wieder gleichmässig auf der Aussenfläche der Konuswand 81.

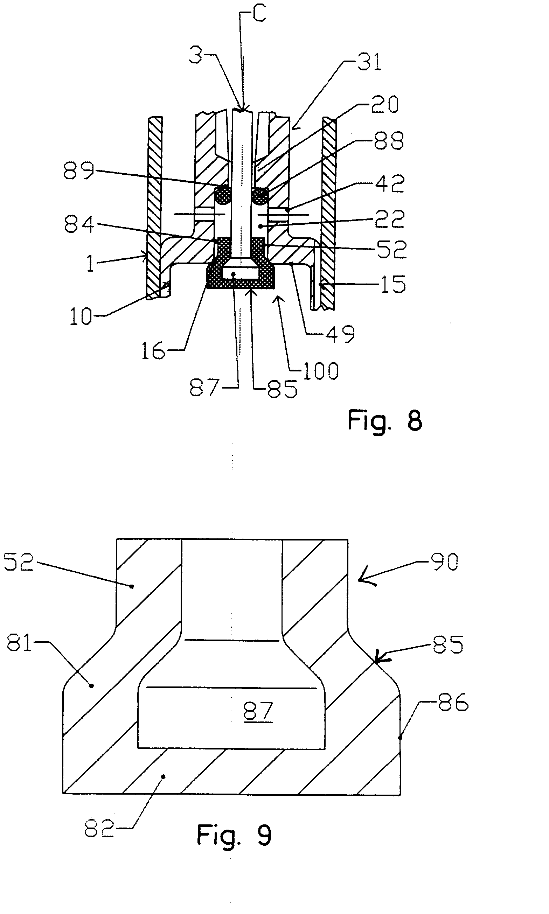

In Fig. 8 und 9 ist eine weitere Ausführungsform der vorliegenden Ventilvorrichtung dargestellt. Das Dichtmittel 100 dieser Ventilvorrichtung umfasst einen Ring 88 und einen Dichtkörper 90. Der Dichtkörper 90 weist ähnlich wie das Dichtelement 50 gemäss Fig. 6 bzw. 7 auch eine Hülsenwand 52 sowie eine sich an diese Hülsenwand 52 anschliessende Erweiterung bzw. einen hohlen Wulst 85 auf. An die Randpartie des Bodens 82 der Erweiterung 85 schliesst sich einerends eine rohrstückförmige Zwischenwand 86 an. Die gegenüberliegende Mündung dieser Zwischenwand 86 ist mit der grösseren Mündung der Konuswand 81 einstückig. Auch bei dieser Ventilvorrichtung liegt die Kante der Mündung 16 auf der Aussenseite der Konuswand 81, sodass die Arbeitsweise dieser Ventilvorrichtung gleich sein kann, wie dies vorstehend beschrieben ist. Bei dieser Ausführung ist es möglich, das Ventil auch so zu öffnen, dass die Betätigungsstange 3 in ihrer Achsialrichtung abwärts bewegt wird.

Diese Form des Wulstes 85 biete die Möglichkeit, die Hülsenwand 52 zu verkürzen, sodass ein solcher Dichtkörper 90 sich auf die Endpartie des Betätigungshebels 3 leichter anbringen lässt. Damit dieser Dichtkörper 90 vom Betätigungshebel 3 jedoch nicht wegrutschen kann, ist die dem Innenteil 10 zugewandte Endpartie des Betätigungshebels 3 mit einer Verdickung 87 versehen. Die Dicke der Wand des Dichtkörpers 90 ist praktisch überall gleich gross. Die Aussenform der Verdickung 87 entspricht der Aussenform des Wulstes 85. Die horizontal liegenden Abmessungen der Verdickung 87 am Hebel 3 sind jedoch praktisch um die Dicke der Wand des Materiales des Wulstes 85 kleiner.

In diesem Fall genügt es, wenn die Hülsenwand 52 sich von der Verdickung 87 weg bzw. vom Bereich der Mündung 16 weg nur ein kurzes Stück gegen die Umlaufschulter 20 hin erstreckt. Folglich befindet sich die Hülsenwand 52 nur im unteren Bereich des Teilraumes 22 und der obere Rand dieser Hülsenwand 52 liegt in diesem Fall noch unter den Verbindungskanälen 42. Die Hülsenwand 52 ist bei diesem Wulst 85 im Vergleich mit den vorstehend beschriebenen Hülsenwänden etwas dicker ausgeführt, sodass ein nur schmaler Ringspalt 84 zwischen der Aussenseite der Hülsenwand 52 und der Innenseite des Teilraumes 22 frei bleibt.

Ein solcher Dichtkörper 90 kann den unteren Teilraum 22 gegenüber dem oberen Teilraum 21 im Endstück 12 nicht abdichten. Diese Abdichtung besorgt der bereits erwähnte Dichtring 88, welcher in einem Abstand vom Dichtkörper 90 am Betätigungshebel 3 angebracht ist. Dieser Dichtring 88 ist der Unterseite der umlaufenden Schulter 20 zugeordnet.

Im in Fig. 8 dargestellten Fall hat der Dichtring 88 einen kreisförmigen Querschnitt. Dieser Dichtring 88 kann jedoch auch einen so geformten Querschnitt haben, dass seine Oberseite auf der darüber angeordneten Seitenwand der umlaufenden Schulter 20 möglichst grossflächig aufliegt. Solche Seitenwände der Schulter 20 sowie die dazu passenden Oberflächen am Dichtring bzw. am ersten Dichtwulst sind vorstehend beschrieben. Die dem Dichtring 88 zugewandte Seitenfläche 89 der Schulter 20, welche in Fig. 8 dargestellt ist, liegt in einer Ebene, welche zur Längsachse C senkrecht steht. Ein aus dem hohlen Dichtkörper 90 und dem Dichtring 88 bestehendes Dichtmittel 100 kann auch als zweiteilig bezeichnet werden.

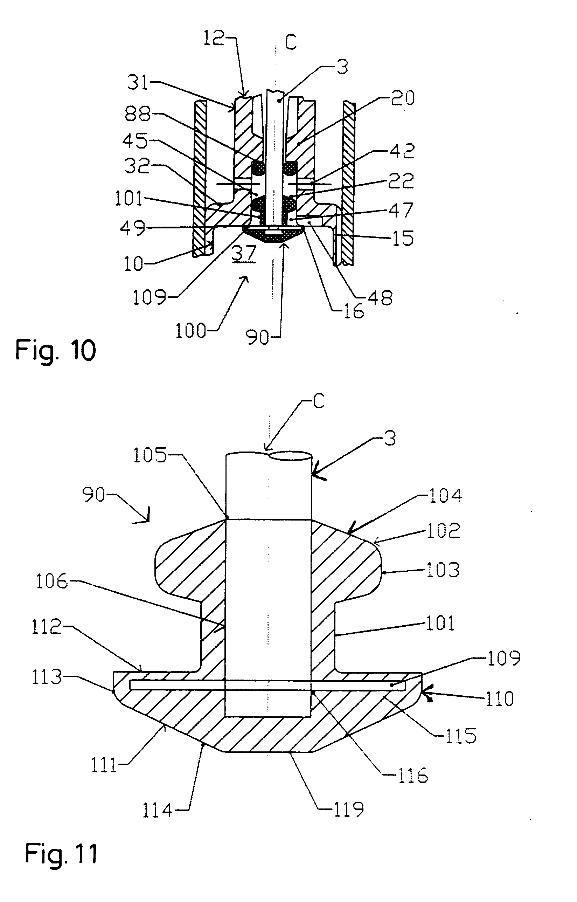

Fig. 10 und 11 zeigen ebenfalls ein zweiteiliges Dichtmittel 100, welches den Dichtring 88 und einen Dichtkörper 90 enthält. Dieser Dichtkörper 90 umfasst einen kurzen hülsenförmigen Grundkörper 101, welcher sich, gleich wie vorstehend beschrieben, nur im unteren Bereich des unteren Teilraumes 22 befindet und hier erstreckt. Dieser Teilraum 22 hat eine zylinderförmige Seitenwand 45, welche sich von der Schulter 20 im Endstück 12 bis zur Mündung 16 des Teilraumes 22 erstreckt. Von der dem Innenraum 37 zugewandten Stirnfläche 49 des Grundkörpers 31 her ist eine Aussparung 48 im Grundkörper 31 ausgeführt. Diese Aussparung 48 befindet sich im Bereich der Mündungskante 16 am Grundkörper 31. Eine der Mündungen der Aussparung 48 liegt in der Stirnfläche 49 und die andere Mündung liegt in der Seitenwand 45 des inneren Teilraums 22. Die Aussparung 48 kann als ein Kanal im Grundkörper 31 oder aber auch als ein Einschnitt (Fig. 10) im Grundkörper 31 ausgeführt sein, welcher die Kontur der Mündung 16 unterbricht.

Der Durchmesser des zylinderförmigen Hohlraumes 106 in der Hülse 101 des Dichtkörpers 90 entspricht dem Durchmesser der unten liegenden Endpartie des Betätigungshebels 3. An das obere bzw. der Schulter 20 zugewandte Ende der Hülse 101 schliesst sich eine Verdickung 102, welche die Form eines von der Aussenseite der Hülse 101 abstehenden Wulstes hat und welche mit der Hülse 101 einstückig ist. Die Umfangsfläche 103 des Wulstes 102 hat im Querschnitt die Form eines Kreisbogens. Der Durchmesser dieser Umfangsfläche 103 entspricht dem Durchmesser der Innenwand 45 des Teilraumes 22, sodass der Wulst 102 an der Innenwand 45 dieses Teilraumes 22 dichtend aufliegt. Die Oberwand 104 des Wulstes 102 ist konusförmig, wobei die den kleineren Durchmesser aufweisende Grundfläche 105 im Bereich der oberen Mündung des Hohlraumes 106 im hülsenförmigen Grundkörper 101 liegt. Diese konusförmige Oberwand 104 erleichtert das Einführen des Dichtkörpers 90 durch die Mündung 16 in den unteren Teilraum 22.

An das untere bzw. von der Schulter 20 abgewandte Ende der Hülse 101 schliesst sich ein Dichtglied 110 an, welches mit der Hülse 101, gleich wie der Wulst 102, ebenfalls einstückig ist. Der Grundkörper 111 des Dichtgliedes 110 weist eine im wesentlichen plane Grundfläche 112 auf, welche die Hülse 101 umgibt, welche von der Aussenseite dieser Hülse 101 absteht und welche praktisch senkrecht zur Längsachse C steht.

An die Grundfläche 112 des Dichtgliedes 110 schliesst sich einerends eine umlaufende Wand 113 dieses Grundkörpers 111 an, welche die Form eines kurzen Zylinders hat. An das von der Grundfläche 112 abgewandte Ende der Umfangswand 113 schliesst sich eine konusförmige Stirnwand 114 des Dichtgliedes 110 an. Die grössere Grundfläche dieser Stirnwand 114 schliesst sich an die Umfangswand 113 an. Der kleineren Grundfläche der Stirnwand 114 ist eine plane und einen kreisförmigen Umfang aufweisende Stirnfläche 119 zugeordnet. Der zylinderförmige Hohlraum 106 in der Hülse 101 erstreckt sich bis in die Nähe dieser Stirnfläche 119, wobei der Durchmesser der Stirnfläche 119 dem Durchmesser des Hohlraumes 106 entspricht.

Das Dichtglied 110 umfasst auch eine Scheibe 115, welche quer zur Längsachse C steht und welche im Inneren des Grundkörpers 111 dieses Dichtgliedes 110 untergebracht bzw. eingebettet ist. In der Mitte der Scheibe 115 ist eine Oeffnung 116 ausgeführt, welche mit dem zylinderförmigen Hohlraum 106 in der Hülse 101 axial ausgerichtet ist. Das Dichtglied 110 ist auf dem innenliegenden Ende der Betätigungsstange 3 aufgesteckt, wobei dieses Stangenende im genannten Hohlraum 106 liegt und sich bis in den Bereich des Dichtgliedes 110 erstreckt. Dabei geht das untere Ende der Betätigungsstange 3 durch die Oeffnung 116 in der Scheibe 115 hindurch. Die Haltescheibe 115 ist in einer an sich bekannten Weise mit diesem Ende der Betätigungsstange 3 verbunden.

Sowohl die Grundfläche 112 des Dichtgliedes 110 als auch die in diesem eingebettete Scheibe 115 haben einen Durchmesser, welcher grösser ist als der Durchmesser der zylinderförmigen Wand 45 im Teilraum 22. Dieser Durchmesser ist somit auch grösser als der Durchmesser der Mündung 16 des Teilraumes 22. Die Folge davon ist, dass eine Randpartie 109 sowohl der Grundfläche 112 als auch der Versteifungsscheibe 115 jenen Bereich der innenliegenden Stirnfläche der Scheibe 32 am Grundkörper 31 des Endstückes 12 überdecken, welche sich an die Mündung 16 des Endstückes 12 unmittelbar anschliesst.

Wenn sich die Betätigungsstange 3 in ihrer mittleren d.h. unbetätigten Stellung befindet, dann ist das Dichtglied 110 axial ausgerichtet und alle Abschnitte der Randpartie 109 des Dichtgliedes 110 liegen auf der Stirnfläche 49 der Scheibe 32 des Endstückes 12 gleichmässig auf. Der Innenraum 37 im Innneteil 10 ist durch die Aussparung 48 mit jenem Abschnitt 47 des inneren Teilraumes 22 fluidmässig verbunden, welcher zwischen der Verdickung 102 und dem Dichtglied 110 liegt. Da die Verdickung 120 an der Seitenwand 45 des Teilraumes 22 dichtend aufliegt, kann kein Fluid durch die Aussparung 48 zwischen dem Innenraum 37 im Innteil 10 und dem Kanal 15 fliessen.

Bei einer seitlichen Auslenkung des Betätigungshebels 3 wird der Wulst 102 aus seiner axial ausgerichteten Stellung seitlich bewegt und sein Material wird in diesem Bereich zwischen der Stage 3 und der Innenwand 45 gequetscht. Im Bereich der gegenüberliegenden Seite der Betätigungsstange 3 entsteht ein Spalt zwischen der Umfangsfläche 103 des Wulstes 102 und der Innenwand 45. Durch diesen Spalt sowie durch die Aussparung 48 kann das Fluid in der einen oder in der anderen Richtung strömen.

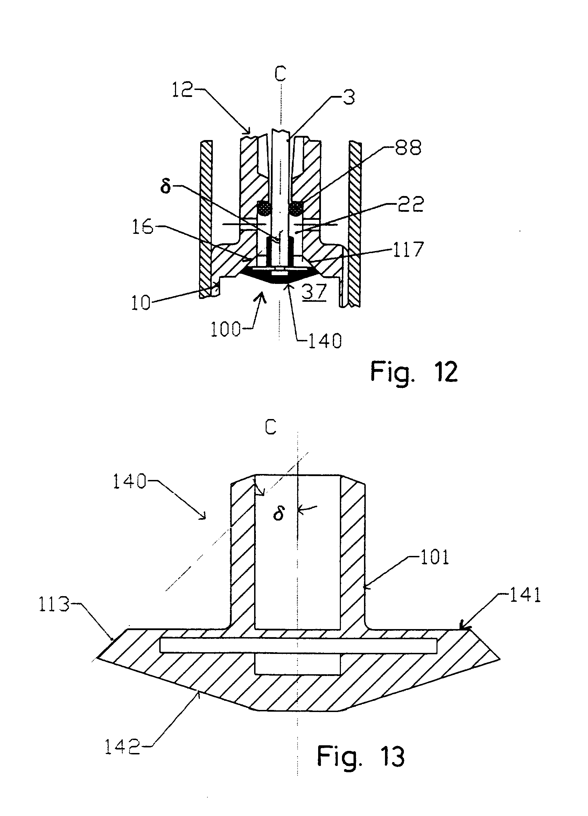

Die Ventilvorrichtung gemäss Fig. 12 und 13 umfasst den bereits beschriebenen Dichtring 88 sowie einen Dichtkörper 140. Dieser Dichtkörper 140 umfasst die im Zusammenhang mit Fig. 10 und 11 bereits beschriebene Hülse 101 sowie ein Dichtglied 141. Dieses Dichtglied 141 ist im Wesentlichen so ausgebildet wie das Dichtglied 110 aus Fig. 11. Im Unterschied dazu weist das vorliegende Dichtglied 141 eine Phase bzw. eine Konusfläche 113 auf, welche sich im Bereich der Randpartie des Grundkörpers 142 dieses Dichtgliedes 141 befindet. Diese Ventilanordnung umfasst eine Phase bzw. eine Konusfläche 117 auch im Bereich der unteren Mündung 16 des Teilraumes 22 im Endstück 12 (Fig. 12).

Der jeweilige Wandabschnitt der genannten Konusfächen 113 und 117 schliesst mit der Längsachse C einen Winkel Delta. Dieser Winkel Delta ist bei den beiden Konusflächen 113 und 117 gleich gross, sodass die schräg verlaufende Umfangsfläche 113 des Dichtgliedes 141 auf der ebenfalls schräg verlaufenden Innenfläche 117 am Endstück 12 grossflächig aufliegen kann. Der Winkel Delta, welcher sich zwischen der jeweiligen Konuswand 113 bzw. 117 und der Längsachse C erstreckt, ist kleiner als 90 Grad und er kann beispielsweise 45 Grad betragen. Durch eine geeignete Wahl der Grösse des Winkels Delta kann die Grösse der Berührungsfläche zwischen der Mündung 16 und dem Dichtglied 141 gewählen bzw. eingestellt werden. Dieses Ventil wird durch eine axial gerichtete Bewegung der Stange 3 betätigt.

Bei den vorstehend beschriebenen Ausführungsformen war die Betätigungsstange 3 als ein geradlinig verlaufender Stab ausgeführt. Dieser Stab konnte zur Betätigung der Ventilvorrichtung aus seiner mittigen Ruhestellung seitlich ausgeschwenkt werden. Zur Betätigung der Ventilvorrichtung konnte der Betätigungsstab 3 jedoch auch in der Richtung seiner Längsachse bzw. der Längsachse C abwärts bewegt werden.

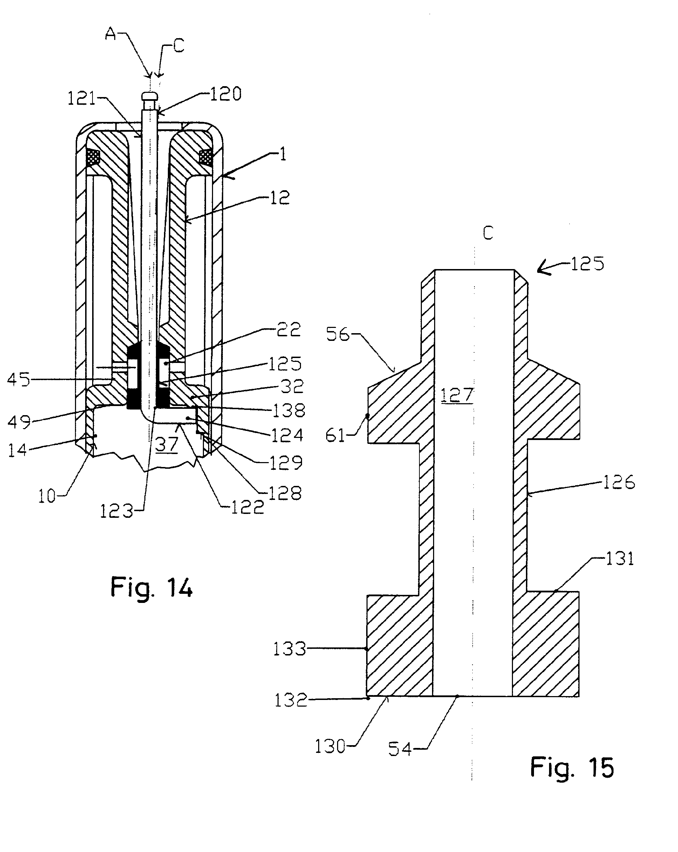

In Fig. 14 ist eine Ausführungsform der vorliegenden Ventilvorrichtung dargestellt, bei der die Betätigungsstange 120 L-förmig ist. Diese Stange 120 umfasst zwei unterschiedlich lange Schenkel 121 und 122, zwischen welchen sich ein Knie 123 befindet. Der grössere Teil des ersten bzw. längeren L-Schenkels 121 befindet sich im Inneren des Endstückes 12 und die Längsachse A dieses L-Schenkels 121 fällt in Ruhestellung der Betätigungsstange 120 mit der Längsachse C praktisch zusammen. Der L-Schenkel 121 geht auch durch den unteren Teilraum 22 des Endstückes 12 hindurch, sodass der Kniebereich 123 dieser Stange 120 im Inneren 37 des Innenteiles 10 liegt. Die gegenüberliegende Endpartie des längeren L-Schenkels 121 ragt in der vorstehend bereits beschriebenen Weise oben aus dem Aussenteil 1 heraus und sie kann in einer an sich bekannten Weise betätigt werden. Dieser L-Schenkel 121 ist im Endstück 12 mit Spiel gelagert, sodass er nicht nur Schwenk- bzw. Kippbewegungen quer zur Längsachse C sondern auch Drehbewegungen um seine eigene Längsachse A bzw. um die Längsachse C der Fluidfeder ausführen kann.

Der kürzere L-Schenkel 122 schliesst sich an den Kniebereich 123 der Betätigungsstange 120 an, sodass er im Innenraum 37 des Innenteiles 10 ebenfalls liegt. Dabei verläuft dieser L-Schenkel 122 praktisch senkrecht zur Längsachse A des längeren L-Schenkels 121 und seine freie Endpartie 124 liegt in der Nähe der Innenwand 14 des Innenteiles 10. Von dieser Innenwand 14 steht ein Vorsprung 128 in diesem Bereich der Innenwand 14 und auf der Höhe dieses L-Schenkels 122 in Radialrichtung ab, wobei diese Vorsprung 128 sich in der Umfangsrichtung des Innenteiles 10 erstreckt. Dieser Vorsprung 128 ist in Fig. 14 im Vertikalschnitt dargestellt und er hat die Form eines Kreisbogens, welcher sich über eine bestimmte Strecke entlang der Innenwand 14 erstreckt.

Der kreisbogenförmige Vorsprung 128 weist eine ebenfalls kreisbogenförmig verlaufende Stirnfläche 129 auf, welche zur Längsachse C parallel verläuft und welche einen kleineren Radius aufweist als die Innenwand 14. Auf der Stirnfläche 129 des Vorsprunges 128 liegt die Stirnfläche der Endpartie 124 des kürzeren L-Schenkels 122 auf. In Fig. 14 ist jene Stellung der Stange 120 dargestellt, in welcher die Endpartie 124 des kürzeren L-Schenkels 122 etwa in der Mitte der Länge der stärker gekrümmten Stirnfläche 129 des Vorsprunges 128 steht. Diese Stelle der Stirnfläche 129 liegt zur Innenwand 14 am nächsten. Die Stirnfläche des kürzeren L-Schenkels 122 kann auf der Stirnfläche 129 des Vorsprunges 128 gleiten, wenn die Stange 120 bzw. ihr längerer L-Schenkel 121 um die Längsachse A gedreht wird. Die Länge der Stirnfläche 129 am Vorsprung 128 entspricht der grösst möglichen Länge jenes Weges, welchen die Stirnfläche der Endpartie 124 des kürzeren L-Schenkels 122 während des Schwenkens der Betätigungsstange 120 zurücklegen kann.

Die Stirnfläche 49 der Ringscheibe 32 des Endstückes 12 trägt einen weiteren Vorsprung 138, welcher von dieser Stirnfläche 49 parallel zur Längsachse C, d.h. axial absteht und welcher sich somit im Innenraum 37 befindet. Dieser Vorsprung 138 hat die Form eines Bogens, welcher sich in einem kleinen Abstand von der Stirnfläche 129 des ersten Vorsprunges 128 befindet und welcher praktisch parallel zu diesem verläuft. Der oben liegende Bereich der Umfangsfläche der freien Endpartie 124 des kürzeren L-Schenkels 122 liegt auf der Unterseite dieses zweiten Vorsprunges 138 auf. Die Länge dieses Achsialvorsprunges 138 in der Umfangsrichtung ist grösser als die Länge des Umfangsvorsprunges 128. Der Achsialvorsprung bzw. dieser zweite Vorsprung 138 gleicht jenen Abstand zwischen der Stirnfläche 49 des Endstückes 12 und der Oberseite des Umfanges des kürzeren L-Schenkels 122 aus, welcher durch die bogenförmige Kniepartie 123 der L-Stange 120 konstruktiv bedingt ist. Dieser Vorsprung 138 ermöglicht, dass der kürzere L-Schenkel 122 bei Ruhelage der Betätigungsstange 120 parallel zur Stirnwand 49 verläuft und dass der längere L-Schenkel 121 sich in seiner axialen Lage befindet.

Diese Ventilvorrichtung enthält auch ein Dichtelement 125 (Fig. 15), welches einen praktisch zylinderförmigen und an beiden Enden offenen Grundkörper 126 aufweist. Der Durchmesser des Kanals 127 in diesem Grundkörper 16 ist so gewählt, dass der sich in der Nähe des Knies 123 des L-Hebels 120 befindliche Abschnitt des längeren L-Schenkels 121 durch diesen Kanal 127 und somit auch durch den Grundkörper 126 dieses Dichtelementes 125 hindurchgehen kann. Das Dichtelement 125 kann beispielsweise so ausgeführt sein, wie dies im Zusammenhang mit den in Fig. 3 oder 5 dargestellten Elementen 50 vorstehend beschrieben ist.

Der oben liegende Wulst 56 ist beim in Fig. 15 dargestellten Dichtelement 125 gleich wie vorstehend beschrieben ausgeführt. Der untere und vom Grundkörper 126 ebenfalls abstehende Wulst 128 hat einen viereckförmigen Querschnitt, wobei die horizontalen Seiten 131 und 132 dieses Querschnittes senkrecht zur Längsachse C stehen, während die äussere Seite 133 des Querschnittes parallel zur Achse C verläuft. Die untere horizontale Seite 131 des Querschnittes ist bündig mit der Mündung des Kanals 127 in diesem Dichtelement 125. Der äussere Durchmesser der Wülste 56 und 130 ist praktisch gleich gross und dabei so gewählt, dass die Seitenflächen 61 und 133 der Wülste 56 und 130 am Dichtelement 125 im unbetätigten Zustand der Ventilvorrichtung an der Seiten- bzw. Innenwand 45 des Teilraumes 22 und entlang ihrem ganzen Umfang gleichmässig, d.h. dichtend aufliegen, wenn sich die Stange 120 in ihrer unbetätigten Stellung befindet.

Wenn die Stange 120 um die Längsachse A ihres längeren L-Schenkels 121 aus ihrer Ruhestellung gedreht bzw. geschwenkt wird, dann gleitet die Stirnfläche des kürzeren L-Schenkels 122 entlang der Stirnfläche 129 des Umfangsvorsprunges 128. Da diese Stirnfläche 129 stärker gekrümmt ist als die Innenwand 14, wird der kürzere L-Schenkel 122, während sich seine Endpartie 124 gegen das eine oder das andere Ende des stärker gekrümmten Umfangsvorsprunges 128 hin bewegt, gegen die Längachse C hin bewegt. Dadurch wird der längerer L-Schenkel 121 aus seiner neutralen Lage gebracht. Dabei deformiert er das Dichtelement 125 so, dass die Umfangsflächen 61 und 133 seiner Wulste 56 und 130 an der Innenfläche 45 des Teilraumes 22 im Endstück 12 nicht mehr dichtend aufliegen. Dadurch entstehen zwischen der Innenwand 45 und den genannten Umfangs- bzw. Aussenflächen 61 und 13 der Wulste 56 und 130 Spalte, durch welche das Fluid in der einen oder in der anderen Richtung strömen kann.

Es versteht sich, dass diese Ventilvorrichtung auch durch Kippen der Stange 120 praktisch senkrecht zur Längsachse C der Fluidfeder betätigt werden kann, weil das Dichtelement 125 auch in diesem Fall durch den längeren L-Schenkel 121 in der beschriebenen Weise deformiert werden kann.

Die im Zusammenhang mit Fig. 14 beschriebene Ventilvorrichtung kann auch so ausgeführt sein, dass bei dieser der Umfangsvorsprung 128 wegfällt und dass anstelle von diesem die nach unten gerichtete Stirnfläche des achsialen Vorsprungs 138 eine Unebenheit erhält. Diese Unebenheit kann entweder als eine Vertiefung, z.B. eine Kerbe in der Stirnfläche dieses Vorsprungs 138 oder als eine hervorstehende Nase ausgeführt sein, welche sich aus der Stirnfläche des achsialen Vorsprungs 138 erhebt. Die Scheitelfläche dieser Nase ist im wesentlichen plan und zwischen der jeweiligen Seite dieser Nase und der Stirnfläche des Achsialvorsprungs 138 erstreckt sich je eine schräg verlaufende Rampe, welche einerseits in die plane Nasenstirnfläche und andererseis in die Stirnfläche des Achsialvorsprungs 138 fliessend übergeht.

Das Ventil ist geschlossen, wenn die Längsachse A des längeren L-Schenkels 121 mit der Längsachse C der Fluidfeder zusammenfäll und wenn der kürzere L-Schenkel 122 zwar auf der Stirnfläche des Achsialvorsprungs 138 jedoch ausserhalb der an diesem ausgeführten Unebenheit aufliegt. Wenn die Betätigungsstange 120 nun um die Längsachse A des längeren L-Schenkels 121 gedreht bzw. geschwenkt wird, dann gelangt die auf dem Achsialvorsprung 138 aufliegende Endpartie 124 des kürzeren L-Schenkels 122 in den Bereich der erwähnten Unebenheit.

Wenn die Unebenheit als eine Nase ausgeführt ist, dann gleitet der kürzere L-Schenkel 122 entlang der darunter liegenden Rampe bis er sich auf der Nasenstirnfläche befindet. Während dieses Aufstieges des kürzeren L-Schenkels 122 wird der längere L-Schenkel 121 aus seiner zentralen Lage ausgeschwenkt. Dadurch wird das Dichtelement 125 deformiert und es entstehen die bereits erwähnten Spalte zwischen den Umfangsflächen des Dichtelementes 125 und der Innenfläche 45 des Teilraumes 22 im Endstück 12. Durch diese Spalte kann das Fluid fliessen, und zwar solange die Spalte vorhanden sind, d.h. solange sich der kürzere L-Schenkel 122 auf der Nase befindet.

Diese die Unebenheit aufweisende Ausführungsform der vorliegenden Fluidfeder bietet somit die Möglichkeit auch einer Dauerauslösung der Fluidfeder. Diese Dauerauslösung wird in bestimmten Anwendungsfällen solcher Fluidfeder gefordert. Dagegen, wenn sich der kürzere L-Schenkel 122 ausserhalb der Nase befindet, dann lässt sich die Fluidfeder in der vorstehenden bereits beschrieben Weise vorübergehend auslösen, d.h. dass die genannten Spalte sich nach der Betätigung der Stange 3 schliessen, sobald man die Betätigungsstange 3 loslässt.

## Patentansprüche

1. Längenverstellbare Fluidfeder, mit einem Zylinder (10), in welchem ein Kolben (4) angeordnet ist, mit Endstücken (12,13), welche den Endpartien des Zylinders zugeordnet sind, und mit einer Ventilvorrichtung (30), welche in einem der Endstücke (12) ausgeführt ist, wobei diese Ventilvorrichtung eine Betätigungsstange (3) sowie zumindest ein Dichtelement (50) aufweist, dadurch gekennzeichnet, dass das Dichtelement (50) auf der Betätigungsstange (3) der Ventilvorrichtung (30) befestigt ist.

2. Fluidfeder nach Patentanspruch 1, dadurch gekennzeichnet, dass das Dichtelement als eine Hülse ausgeführt ist, welche auf der Betätigungsstange befestigt ist.

3. Fluidfeder nach Patentanspruch 2, dadurch gekennzeichnet, dass die Hülse (50,125) eine praktisch zylinderförmige Seitenwand (52,126) aufweist und dass dieses Dichtelement zumindest eine Erhebung bzw. ein Wulst (56,57;57,76;56,80;88,85;88,104, 111;88,102,111;56,133) aufweist, welche bzw. welcher von der Aussenseite der Hülsenwand (52,101,126) absteht.

4. Fluidfeder nach Patentanspruch 3, dadurch gekennzeichnet, dass die Hülse (50) ferner einen Boden (53,82,119) aufweist, welcher einer der Endpartien der Hülse zugeordnet ist, dass die Erhebung (57,80,85,111) sich im Bereich dieser Endpartie der Hülse befindet, dass dieses Dichtelement auf einem Ende (43) der Betätigungsstange aufgesteckt ist, dass eine zweite Erhebung bzw. ein zweiter Wulst (56,76,88,102) am Dichtelement vorgesehen ist, welche bzw. welcher sich im gegenüberliegenden Endbereich der Hülsenwand (52,101, 126) des Dichtelementes befindet, und dass diese zweite Erhebung ebenfalls als ein Wulst bzw. Bund ausgeführt ist.

5. Fluidfeder nach Patentanspruch 4, dadurch gekennzeichnet, dass der Querschnitt des ersten Wulstes (57) vier Seiten aufweist, dass die erste dieser Seiten zur Längsachse C des Dichtelementes parallel verläuft, wobei der Wulst über diese Seite mit der Aussenseite der Hülsenwand (52) des Dichtelementes einstückig ist, dass die zweite Wulstwand praktisch senkrecht zur Längsachse C steht und sich in jenem Bereich des Wulstes befindet, welcher dem Hülsenboden (53) zugewandt ist, dass der Querschnitt des zweiten Bundes (56) vier Seiten aufweist, dass die erste Seite und die dritte Seite (61) zur Längsachse C des Dichtungselementes parallel verlaufen, wobei der Wulst (56) über die erste Seite mit der Aussenseite der Hülsenwand (52) einstückig ist, dass die zweite Wulstwand (62) praktisch senkrecht zur Längsachse C steht und sich an jener Seite des Wulstes befindet, welche dem Hülsenboden (53) zugewandt ist, dass die vierte Wulstwand schräg zur Längsachse C verläuft.

6. Fluidfeder nach Patentanspruch 3, dadurch gekennzeichnet, dass die erste Erhebung als eine Erweiterung (80,85) der Hülsenwand ausgeführt ist.

7. Fluidfeder nach Patentanspruch 6, dadurch gekennzeichnet, dass die Erweiterung hohl ist und dass eine Verdickung (87) am freien Ende der Betätigungsstange (3) ausgeführt sein kann, welche im Hohlraum der Verdickung angeordnet ist.

8. Fluidfeder nach Patentanspruch 3, dadurch gekennzeichnet, dass eine radial abstehende Verdickung (102) in Form eines Wulstes vom oberen Ende der Hülse (101) absteht, dass ein Dichtglied (110) sich an das untere Ende der Hülse (101) anschliesst, dass der Grundkörper (111) dieses Dichtgliedes (110) eine im wesentlichen plane Grundfläche (112) aufweist, welche praktisch senkrecht zur Längsachse C steht und sich im Bereich des unteren Endes der Hülse (101) befindet, dass eine umlaufende Wand (113) sich an die Grundfläche (112) anschliesst, dass eine konusförmige Grundwand (114) sich an die gegenüberliegende Seite der Umfangswand (113) anschliesst und dass eine Scheibe (115), welche quer zur Längsachse C steht, im Inneren des Grundkörpers (111) dieses Dichtgliedes (110) untergebracht ist.

9. Fluidfeder nach Patentanspruch 6 oder 8, dadurch gekennzeichnet, dass ein zweites Dichtelement (88) vorgesehen ist, dass dieses Dichtelement auf der Betätigungsstange (3) befestigt ist und sich in einem Abstand vom ersten Dichtelement (50,90) befindet und dass das zweite Dichtelement (88) als ein O-Ring ausgeführt sein kann.

10. Fluidfeder nach Patentanspruch 1, dadurch gekennzeichnet, dass die Betätigungsstange (120) als ein L-förmiger Stab ausgeführt ist, dass das Dichtelement (125) einen praktisch zylinderförmigen Grundkörper (126) aufweist, dass die Betätigungsstange (120) durch diesen Grundkörper (126) hindurchgeht und dass voneinander beabstandete Wulste (56,130) am Hülsenkörper (126) vorhanden sind.
